# EUROPÄISCHE PATENTSCHRIFT

(11) **EP 1 432 535 B1**
(45) Veröffentlichungstag und Bekanntmachung des Hinweises auf die Patenterteilung: **01.06.2005**
(21) Anmeldenummer: 02776975.1
(22) Anmeldetag: 03.09.2002
(51) Int. Cl.: B09B 3/00, B03B 9/06, C10L 5/46

(54) **VERFAHREN ZUM AUFBEREITEN VON ABFALLSTOFFEN UND AUFBEREITUNGSANLAGE**
METHOD FOR PROCESSING WASTE PRODUCTS AND CORRESPONDING PROCESSING PLANT
PROCEDE PERMETTANT DE TRAITER DES DECHETS ET INSTALLATION DE TRAITEMENT

(30) Priorität: 03.09.2001 DE 10142906
(43) Veröffentlichungstag der Anmeldung: 30.06.2004
(73) Patentinhaber: Hartmann, Rudolf, 4460 Gelterkinden (CH)
(72) Erfinder: WIDMER, Christian, CH-4102 Binningen (CH); HARTMANN, Rudolf, CH-4460 Gelterkinden (CH)
(74) Vertreter: Winter, Brandl,&Fürniss, Hübner Röss, Kaiser, Polte Partnerschaft Patent- und Rechtsanwaltskanzlei
(86) Internationale Anmeldenummer: PCT/EP2002/009855
(87) Internationale Veröffentlichungsnummer: WO 2003/020450

(56) Entgegenhaltungen:
- US-B1- 6 244 199

## Beschreibung

Die Erfindung betrifft ein Verfahren zum Aufbereiten von Abfallstoffen gemäß dem Oberbegriff des Patentanspruches 1 und eine Restmüllaufbereitungsanlage gemäß dem Oberbegriff des nebengeordneten Patentanspruches 13.

Die Verwertung von Abfällen wie beispielsweise Hausmüll, gewerblicher Müll, Biomüll, etc. ist im Abfallgesetz vom Gesetzgeber vorgeschrieben und wenn immer möglich einer Abfallentsorgung vorzuziehen. Das Abfallgesetz gilt prinzipiell für jeden Abfallbesitzer sowie für entsorgungspflichtige Körperschaften wie beispielsweise Städte und Reinigungsbetriebe. Im Abfallgesetz und in der Bundesemmissionsschutzverordnung (BIMSCHV) ist geregelt, daß die Abfälle derart zu sammeln, transportieren, zwischenzulagern und zu behandeln sind, daß die Möglichkeiten der Abfallverwertung nicht behindert werden. Zur Erfüllung dieser Verwertungspflicht stehen den Kommunen eine stoffliche oder eine energetische Verwertung zur Verfügung.

Unter stofflicher Verwertung versteht man die Aufbereitung des Abfalls zu einem sekundären Rohstoff, der dann energiewirtschaftlich genutzt wird. D.h. man versteht unter der Herstellung des Ersatzbrennstoffes eine stoffliche Verwertung, die von der direkten Verbrennung des Abfalles zu unterscheiden ist. Die letztgenannte Alternative ist derzeit die am häufigsten angewandte Art der Abfallverwertung. Problematisch bei dieser thermischen Verwertung ist jedoch, daß die vom Gesetzgeber vorgegebenen Grenzwerte, insbesondere im Rauchgas einzuhalten sind, so daß erhebliche anlagentechnische Aufwendungen unternommen werden müssen, um die gesetzlichen Vorgaben zu erfüllen. Des weiteren stehen die herkömmlichen Müllverbrennungsanlagen öffentlich in der Diskussion, so daß in den Kommunen Bestrebungen vorhanden sind, den Abfall einer stofflichen Verwertung zuzuführen.

In der DE 196 48 731 A1 ist ein Abfallaufbereitungsverfahren beschrieben, bei dem organische Bestandteile einer Abfallfraktion in einem Perkolator ausgewaschen werden und der derart biologisch stabilisierte Rückstand nach einer Trocknung verbrannt wird. Diese Verbrennung erfolgt in einer herkömmlichen Müllverbrennungsanlage, so daß hinsichtlich der Abgase die gleichen Probleme wie bei der eingangs beschriebenen thermischen Verwertung vorliegen.

In der DE 198 07 539 ist ein Verfahren zur thermischen Behandlung von Restmüll beschrieben, bei dem aus dem Abfall durch mechanische und biologische Behandlung eine heizwertreiche Fraktion erhalten wird. Diese heizwertreiche Fraktion wird als Ersatzbrennstoff einer Verbrennung einer Anlage zugeführt, die in Energieverbund mit einer energieintensiven Anlage betrieben wird. Alternativ kann dieser Ersatzbrennstoff auch direkt in der energieintensiven Anlage eingesetzt werden. Bei dieser bekannten Lösung erfolgt die biologische Stabilisierung durch einen aeroben Abbau der Organik des aufbereiteten Abfall.

In der DE 199 09 328 A1 ist ein Verfahren zum Aufbereiten von Restmüll offenbart, bei dem dieser einer aeroben Hydrolyse zugeführt wird. Bei dieser aeroben Hydrolyse wird die biologisch zu stabilisierende Fraktion in einem Reaktor mit Luft und einer Auswaschflüssigkeit (Wasser) beaufschlagt. Durch die Einwirkung des Luftsauerstoffes und die gleichzeitig eingestellte Feuchtigkeit erfolgt eine aerobe, thermophile Erwärmung des Stoffgemisches, so daß die Biozellen aufgebrochen und die freigesetzten organischen Substanzen durch die Waschflüssigkeit abtransportiert werden. In diesem bekannten Reaktor wird das Stoffgemisch mittels eines Förder-/Rührwerkes quer zur Luft und zur Auswaschflüssigkeit durch den Reaktor geführt.

Diese aerobe Hydrolyse zeigte in ersten Versuchsanlagen exzellente Ergebnisse, wobei sich mit einem vergleichsweise geringem vorrichtungstechnischen Aufwand ein Ersatzbrennstoff herstellen läßt, der nicht eluierbar, nicht atmungsaktiv ist und sich durch einen hohen Heizwert auszeichnet. Dieser Ersatzbrennstoff kann beispielsweise einer Vergasung zugeführt werden, wobei das entstehende Gas anschließend energetisch oder stofflich in Kraftwerken und Zementwerken oder bei der Herstellung von Methanol oder als Reduktionsmittel in Stahlwerken eingesetzt werden kann.

Bei dem vorbeschriebenen Abfallverwertungsverfahren ist jedoch noch ein hoher vorrichtungstechnischer Aufwand zur Durchführung der aeroben Hydrolyse erforderlich, so daß derartige Anlagen zum einen erheblichen Platzbedarf erfordern und zum anderen vergleichsweise teuer sind. So werden grosse Mengen von hochbelasteten Abgasen erzeugt, welche genau der 30. BIMSCHV einer aufwendigen und kostenintensiven Gasreinigung und Verbrennung zugeführt werden müssen.

Demgegenüber liegt der Erfindung die Aufgabe zugrunde, ein Verfahren zum Aufbereiten von Abfallstoffen und eine Aufbereitungsanlage zu schaffen, durch die die Stabilisierung des Restmülls mit verringertem verfahrens- und vorrichtungstechnischen Aufwand durchgeführt werden kann.

Diese Aufgabe wird hinsichtlich des Verfahrens durch die Merkmale des Patentanspruches 1 und hinsichtlich der Aufbereitungsanlage durch die Merkmale des Patentanspruches 13 gelöst.

Erfindungsgemäß erfolgt eine thermische Stabilisierung von Abfall in einem Reaktor, der etwa im Siedebereich von Wasser unter Vakuum betrieben wird. Durch den Betrieb im Vakuum entstehen praktisch keine Abgase, wobei die Reststoffe als Produkt trockenstabil und hygienisch gehandhabt und gelagert werden können.

Durch die erfindungsgemässe Betriebsweise des Reaktors läßt sich der Abbau der organischen Zellen durch den biologischen Aufschluß gegenüber den eingangs beschriebenen herkömmlichen Perkolationsverfahren wesentlich beschleunigen, so daß nur noch ein Bruchteil der bisher üblichen Materialdurchlaufzeiten erforderlich ist. Dies ermöglicht es, den Reaktor wesentlich kompakter auszubilden, wobei gemäß ersten Vorversuchen das Reaktorvolumen bei gleichem Durchsatz nur noch etwa 5% eines bisherigen Perkolators beträgt.

Durch die thermische Beaufschlagung der organischen Bestandteile des Restmülls im Siedebereich von Wasser werden die Membranen der wasserführenden Zellstrukturen explosionsartig zerstört und das so freigesetzte organisch hochbelastete Zellwasser kann aus dem Reaktor abgezogen werden. Durch die Erhitzung und Vakuumeinwirkung im Reaktor werden die Inhaltsstoffe hygienisiert und können human medizinisch unbedenklich gehandhabt werden.

Durch die Absenkung der Siedetemperatur durch Vakuum unter den Schmelzpunkt von Kunststoffbestandteilen des Abfallstoffs können die Kunststoffteile während der Siedeextraktion oder der Siedetrocknung nicht aufschmelzen und Innenumfangswandungen des Behälters verschmieren und dadurch den Wärmeübergang verschlechtern.

Bei einer vorteilhaften Variante des erfindungsgemässen Verfahrens wird der Reaktor als Siedeextraktor gefahren, wobei der auf Siedetemperatur erwärmte Restmüll mit einer Auswaschflüssigkeit beaufschlagt wird, so dass die organisch beladenen Bestandteile des Restmülls ausgewaschen werden. Vorversuche zeigten, dass bei einem derartigen Siedeextraktor auch im Restmüll vorhandener Stickstoff als Ammoniak gebunden ausgetrieben wird. Durch die Austreibung von Ammoniak wird die Stickstoffbelastung des Restmülls derart reduziert, dass bei sich anschliessenden Verfahrensschritten, beispielsweise einer Aufbereitung organisch belasteter Auswaschflüssigkeit in einer Biogasanlage keine Entstickung durchgeführt werden muss.

Der Anteil der Organik im Restmüll lässt sich weiter absenken, wenn sich an die Siedeextraktion eine Siedetrocknung anschliesst, bei der der nach der Siedeextraktion vorliegende thermisch stabilisierte Restmüll einem erfindungsgemässen Reaktor zugeführt wird, wobei dann allerdings keine Auswaschflüssigkeit zugeführt wird sondern lediglich eine thermische Stabilisierung durch Erhitzen des bereits vorstabilisierten Restmülls in den Siedebereich unter Vakuum erfolt.

Die Effektivität des Verfahrens ist weiter gesteigert, wenn der Siedetrocknung und/oder der Siedeextraktion eine Vorerwärmung vorgeschaltet ist, so dass dem Reaktor weniger Heizenergie zum Erwärmen des Restmülls auf die Siedetemperatur zugeführt werden muss.

Bei geeigneter Zusammensetzung des Restmülls kann es auch ausreichen, die thermische Stabilisierung alleine durch eine Siedeextraktion oder eine Siedetrocknung durchzuführen, wobei vorzugsweise jeweils eine Vorerwärmungsstufe vorgeschaltet ist.

Diese Vorerwärmung wird vorzugsweise durch einen aeroben Rotteprozess durchgeführt. Bei einer derartigen aeroben Erwärmung stellt sich eine biologisch erzeugte Hydrolyse ein, welche den Zellaufschluss biochemisch beschleunigt und dadurch in die Auswaschrate bei einer sich anschliessenden Extraktion bzw. den Wasserentzug bei einer sich anschliessenden Trocknung erhöht.

Der nach dem Siedeextraktor oder dem Siedetrockner anfallende Brüden wird bei einem vorteilhaften Ausführungsbeispiel mittels eines Kondensators oder einer gleichwirkenden Einrichtung abgekühlt und somit kondensiert, so dass der Prozess - abgesehen von geringfügiger Leckageluft - im wesentlichen abluftfrei ausgeführt werden kann.

Die eventuell anfallende Leckageluft lässt sich mit minimalem verfahrenstechnischem Aufwand in einem Brenner verbrennen oder einer weiteren Aufbereitung, beispielsweise einer Abluftreinigungsanlage zuführen.

Wie bereits erwähnt, kann die nach der Siedeextraktion anfallende organische belastete Auswaschflüssigkeit einer Biogasanlage zugeführt werden.

In der Biogasanlage entfrachtetes Gärwasser wird vorzugsweise als Umlauf- oder Prozesswasser zum Siedereaktor zurückgeführt. Das erzeugte Biogas kann zur Erzeugung von Prozesswärme in dem Reaktor oder zur Erzeugung elektrischer Energie verwendet werden, so dass das System im wesentlichen energieautark betrieben werden kann.

Bei einem bevorzugten Ausführungsbeispiel wird das nach der Siedetrocknung vorliegende warme Trockengut einer abluftfreien Kühltrocknung zugeführt, so dass durch die damit einhergehende Taupunktabsenkung das warme Trockengut nochmals entfeuchtet wird.

Das Grundmodul der erfindungsgemässen Restmüllaufbereitungsanlage besteht im Prinzip aus einem beheizbaren, unter Vakuum betreibbaren Reaktor, der mit einem Restmüll- oder Materialeintrag und einem Materialaustrag sowie einer Rührvorrichtung zum Fördern des Restmülls und zum Einbringen von Scherkräften ausgeführt ist.

Dieser Reaktor kann bei Zuführung von Auswaschflüssigkeit als Siedeextraktor und - ohne Auswaschflüssigkeit - als Siedetrockner gefahren werden.

Die Rührvorrichtung des Reaktors wird vorzugsweise derart ausgeführt, dass deren Rührelemente das an den Innenumfangswandungen des Reaktors anhaftende Material bei einer Umdrehung abstreift, so dass an den Wandflächen Verbackungen vermieden werden. Durch die Wirkung der Rührvorrichtung wird das Material entlang der beheizten Innenumfangsflächenwandung verschoben und vom Materialeintrag zum Materialaustrag - und ggf. in entgegengesetzter Richtung - transportiert.

Die Rührvorrichtung wird vorzugsweise schneckenförmig ausgebildet, wobei die Schnecke mit oder ohne Zentralwelle ausgeführt sein kann.

Der Antrieb der Rührvorrichtung wird vorzugsweise mit umdrehbarer Wirkrichtung ausgeführt, so dass die Förderrichtung umkehrbar ist.

Die Wirkung der Rührvorrichtung ist besonders gut, wenn der Rührer beheizbar ausgeführt ist.

Bei einem bevorzugten Ausführungsbeispiel wird der Restmüll und die Auswaschflüssigkeit durch einen gemeinsamen Materialeintrag zugeführt.

Der Reaktor lässt sich sehr kompakt ausführen, wenn dieser mit zwei Teilabschnitten versehen wird, in denen jeweils ein Rührer angeordnet ist. Diese beiden Teilabschnitte können über einen geeigneten Materialvorschub oder einen Materialrückschub miteinander verbunden sein, so dass das Material im Kreislauf förderbar ist.

Bei einer bevorzugten Verfahrensvariante wird die thermisch stabilisierte Abfallfraktion einer Presse zugeführt, wobei die im Presswasser enthaltenen organischen Bestandteile in einer Biogasanlage umgesetzt werden.

Durch die vorbeschriebene Kreislaufführung der bei der Abfallaufbereitung anfallenden, mit biologischen Bestandteilen beladenen Stoffströme können auch härteste Auflagen des Gesetzgebers, wie sie beispielsweise in der 30. BIMSCHV vorgeschrieben sind, mit vergleichsweise geringem Aufwand erfüllt werden, da keine teuren Reinigungsschritte für die Abluft und das anfallende Abwasser nachgeschaltet werden müssen.

Als Energieerzeuger zum Beheizen des Reaktors kann beispielsweise ein Brenner, eine Gasturbine oder ein Gasmotor verwendet werden, die mit den vorgenannten Stoffströmen, beispielsweise dem in der Biogasanlage anfallenden Biogas, der im Siedereaktor anfallenden organisch belasteten Abluft oder der beim Entwässern des Abfalls anfallenden Abluft zur rückstandslosen Verbrennung zugeführt wird.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 ein Verfahrensschema eines Grundmoduls zum Aufbereiten von Restmüll mit einer Siedeextrakion;
Figur 2 ein Grundmodul des erfindungsgemässen Verfahrens zur Aufbereitung von Restmüll mit einer Siedetrocknung;
Figur 3 einen Reaktor zur Verwendung in einem Verfahren gemäss der Figuren 1 und 2;
Figur 4 ein Ausführungsbeispiel des Reaktors aus Figur 1;
Figuren 5, 6, 7 Prinzipdarstellungen zum Zusammenschalten von Reaktorabschnitten für eine Siedeextraktion / Siedetrocknung und
Figur 8 ein Grundschema eines Verfahrens zum Aufbereiten von Restmüll mit einer Siedeextraktion und nachgeschalteter Siedetrocknung.

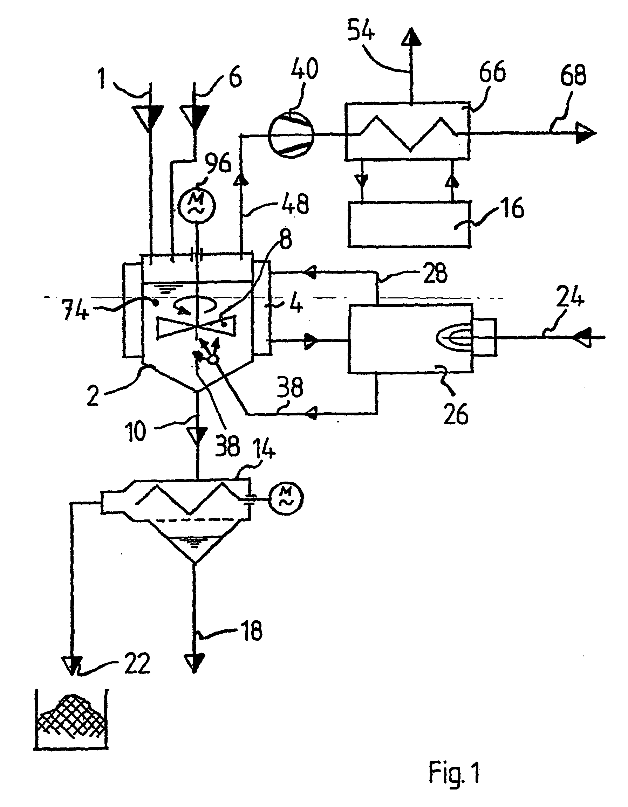

Figur 1 zeigt ein Grundschema einer Mindestausrüstung zur Durchführung eines Siedeextraktionsprozesses für die Behandlung von organisch belasteten Abfallstoffen wie z. B:
- Restmüll
- Grossküchenabfälle
- Abfälle aus der Lebensmittelindustrie
- Gemüse und andere nachwachsende organische Abfallstoffe
- Klär- und Gärschlämme
- biologische Rückstände, bspw. Maischen, aus der Getränkeherstellung

Die organisch belasteten Stoffe 1 werden einem Reaktor 2 zugeführt und mit Frischwasser oder Umlaufflüssigkeit 6 verdünnt. Mit einer Rührvorrichtung 8 wird die Suspension 74 aus Abfall und Flüssigkeit vermischt und transportiert. Die Wärmezufuhr zur Erreichung der Siedetemparatur erfolgt über eine Mantelbeheizung 4.

Zur Beschleunigung des Erhitzungsvorganges kann auch gespannter Dampf 38 direkt in die Suspension 74 miteingetragen werden und / oder durch eine vorgeschaltene Erwärmungsstufe, welche hier nicht dargestellt ist.

Ein substantieller Anteil dieses Restmülls besteht aus kurzkettigen Verbindungen, die meist an der Oberfläche absorbiert sind. Wird diese Oberfläche von dem heissen Prozeßwasser umspült, so werden auch primär nicht lösliche Verbindungen hydrolisiert und ausgewaschen. Die geruchsintensiven Komponenten des Biomülls und die Hydrolyseprodukte sind relativ gut wasserlöslich und können mit der Auswaschflüssigkeit ausgewaschen werden. Mit einer derartigen Extraktion erreicht man eine Reduktion der Organik und eine Desodorierung des Restmülls.

Durch den Betrieb des Siedeextraktors im Bereich des Siedepunktes des Wassers unter Vakuum wird der physikalisch/chemische Effekt der Extraktion durch die Steigerung des bakteriellen Abbaus wesentlich verstärkt. Die organischen Zellen des Stoffgemisches werden aufgebrochen und Zellwasser freigesetzt und die gelöste Organik durch die Auswaschflüssigkeit abtransportiert. Es zeigte sich, daß sich durch Verwendung eines Siedeextraktors 2 anstelle eines herkömmlichen Perkolators die Durchlaufzeit von etwa zwei Tagen bei herkömmlichen Perkolatoren auf zwei Stunden verringert, so daß der Siedeextraktor 2 mit einem wesentlich geringeren Volumen als herkömmliche Perkolatoren ausgebildet werden kann, um den gleichen Durchsatz von Abfall aufzubereiten.

Die Prozesswärmeaufbereitung erfolgt über eine Wärmeerzeugungsanlage 26 mit welcher die Wärmeenergie 28 in Form von Warmwasser, Druckheisswasser, Thermoöl oder Dampf 38 erzeugt wird.

Als der Wärmeerzeugungsanlage zugeführter Energieträger 24 kann, im Prozess eigenerzeugtes Biogas eingesetzt werden, und / oder auch andere fossile Brennstoffe oder elektrische Energie verwendet werden.

Beim Siedevorgang im Siedeextraktor 2 wird durch den Unterdruck der Siedepunkt deutlich unter 100° C gehalten und die Manteltemperatur 4 je nach Suspension 74 auf ein Temperaturniveau eingestellt, so dass sich keine Verbackungen an den Heizflächen einstellen, damit der Wärmeübertrag in die Suspension 74 ohne Verluste erfolgen kann.

Je nach Produktmischung/Suspension 74 können Inhaltsstoffe wie z. B. Plastikteile und Kunststofffolien bereits bei Heizmantel- oder Flächentemparaturen 4 um 80°C beginnen sich zu plastifizieren und die Wärmeübergangsflächen und die Rühreinrichtung 8 mit einer zähklebrigen Schicht zu überziehen. Der Unterdruck wird durch einen Vakuumerzeuger 4 hergestellt (hier dargestellt als Vakuumpumpe) welcher durch den erzeugten Unterdruck von vorzugsweise ≤ 80 mbar den Siedepunkt im Siedeextraktor 2 auf < 60°C absenkt.

Die über Brüden 48 abgehenden Inhaltsstoffe werden in einem Brüdenkondensator 66 durch Kühlung 16 unter den Taupunkt abgekühlt und die Abgase 54 vom Kondensat 68 getrennt. Der Vakuumerzeuger 40 kann, je nach Erfordernis, vor oder nach dem Brüdenkondensator 66 angeordnet werden.

Die am Brüdenkondensator anfallenden Abgase 54 enthalten Leckageluft und Inertgasgemische aus der erhitzten Suspension 74 und Restgasmengen aus Umlaufwasser 6 einer im folgenden näher beschriebenen Biogasanlage. Die anfallenden Abgasmengen betragen dabei bei einer behandelten Suspensionsmenge von 1000 kg unter 1.0 m³ und sind somit äussert gering, so dass praktisch von einem abluftfreien Prozess gesprochen werden kann.

Durch die Suspensionstemperatur zwischen >40°C und <100°C und den wirkenden Unterdruck werden innerhalb von wenigen Minuten Zellstrukturen der biogenen Anteile verändert, Membranen aufgerissen und somit die eingeschlossene biogene Masse dem Auswaschprozess zugänglich gemacht.

Auch werden für den Aufschluss schwer zugänglicher Cellulose- und Ligninverbindungen durch die vorbeschriebene Temperatur- und Vakuumeinwirkung aufgebrochen und als Biopotential der nachfolgenden Biogasanlage 20 (Vergärungsstufe) zugeführt.

Je nach Temperatur und Wärmekapazität der Suspension 74 ist die Aufheizzeit im Siedereaktor 2 unterschiedlich und kann auch durch Vorerwärmung der Zuschlagstoffe 1 und des Prozesswassers 6 ausserhalb des Siedereaktors 2 wesentlich verkürzt werden.

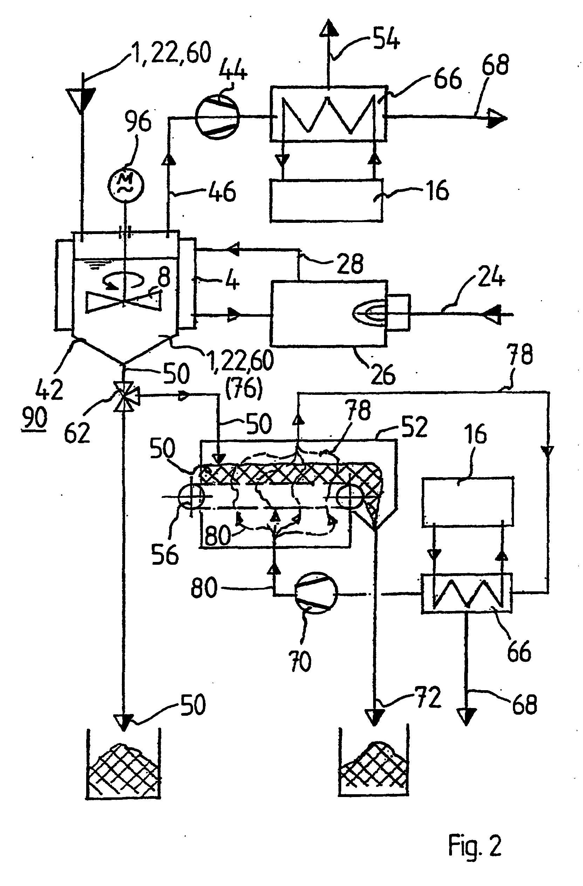

Nachdem sich das Umlaufwasser/Prozesswasser 6 bis zur Sättigung mit gelöster Organik angereichert hat, wird die Suspension 74 ausgetragen und das thermisch stabilisierte Substrat- /Wassergemisch 10 einer Entwässerungseinrichtung 14 zugeführt (hier dargestellt als Klassierpresse). In der Entwässerungseinrichtung 14 wird der Feststoff/Presskuchen 22 von dem mit Organik angereicherten Prozesswasser 18 getrennt. Der Presskuchen 22 kann dann weiteren Prozessschritten zugeführt werden, wie z. B. Kompostierung, biologischer Trockung oder einer mechanisch-thermischen Trocknung wie sie als Beispiel in der Figur 2 dargestellt ist.

Der eigentliche Extraktionsprozess ist Inputmaterialabhängig und dauert im Mittel zwischen einigen Minuten bis über eine Stunde. Durch die Temperatureinwirkung über eine Stunde ist die Suspension 74 hygienisiert und kann nach der Entwässerung 14 und Trocknung 42 (Figur 2) humanmedizinisch unbedenklich gehandhabt, gelagert und weiteren Arbeitsschritten zugeführt werden.

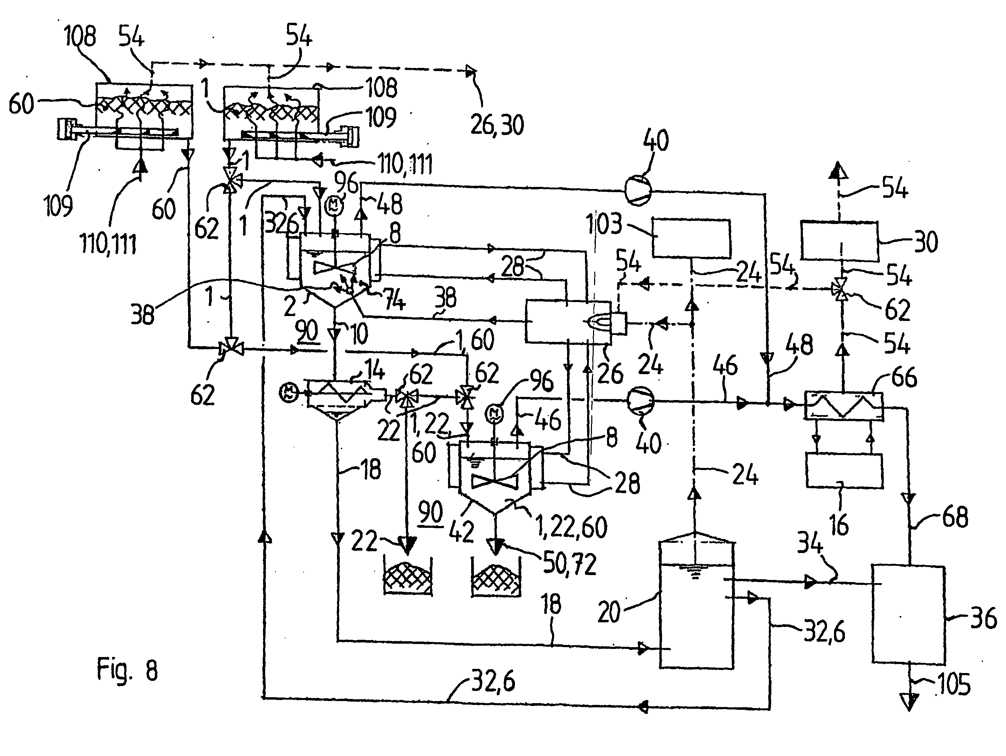

Das Prozesswassser 8 wird vorteilhaft in einer Biogasanlage 20 (Figur 8) entfrachtet in dem der Organikanteil mittels Methanbakterien zu Biogas 24 umgesetzt wird, das dann zur Energierzeugung in der Wärmeerzeugungsanlage 26 und der Gasüberschuss einer weiteren Verwertung 103 (Figur 8) zur Wärme und Stromerzeugung zugeführt wird.

Das entfrachtete Gärwasser 32 (Figur 8) verlässt die Biogasanlage 20 und wird als Prozesswasser/Umlaufwasser 6 wieder dem Siedeextraktor 2 zugeführt.

Die Brüdenkondensate 68 enthalteten einen Grossteil der Stickstoffverbindungen welche den biologischen anaeroben Abbauprozess im Fermenter 20 hemmen können. Deshalb werden die Brüdenkondensate 68 zusammen mit dem Überschusswasser 34 direkt in einer Abwasserreinigung 36 (Figur 8) behandelt und anschliessend als gereinigtes Abwasser 105 in die Kanalisation geleitet oder als Betriebswasser/Prozesswasser 6 teilweise dem Siedeextraktionsprozess 2 zugeführt. Durch diese Reduktion des Stickstoffes vor der Biogasanlage 20 benötigt der Fermentationsprozess keine Stickstoffsenke mehr.

Vorgestellt ist somit ein Verfahren bei welchem in einem Reaktor 2 organisch belastete Stoffe 1 mit Wasser 6 durch Rührwerke 8 vermischt und transportiert werden und durch Wärmeeinwirkung 4 im Bereich des Siedepunktes von Wasser unter Vakuumbeaufschlagung die Suspension 74 derart aufgeschlossen wird, dass innerhalb von wenigen Minuten Zellmembranen zerstört, Lignin- und Celluloseverbindungen aufgebrochen und einem anaeroben Vergärungsprozess in einer Biogasanlage 20 verfügbar gemacht werden, so dass der Ausgangsstoff 10 thermisch hygienisiert ist und nach einem Entwässerungsschritt 14 und nachfolgender Trocknung 42 (Figur 2) human medizinisch als unbedenkliches Stoffgemisch gehandhabt, weiterverarbeitet und gelagert werden kann.

Die Überlegenheit des erfindungsgemässen Verfahrens erschliesst sich aus einem Vergleich der Siedextraktion mit anderen Verfahren, bei welchen aus der Organik von Restmüll mit 50% Wassergehalt Biogas erzeugt wird.

Bei der vorbeschriebenen Siedeextraktion beträgt die Behandlungszeit im Reaktor 2 max. 2 h mit einer Umlaufwassermenge von 10001/Kg Restmüll, und die Umsetzung zu Biogas im Fermenter 20 beträgt max. 5 Tage. Da auch teilweise Zellstoffverbindungen abgebaut werden, beträgt die Gasproduktion ca 150Nm³/1Mg Restmüll. Der Methangehalt beträgt 70%. Die Abluftmenge beträgt ca. 1,0m³/1Mg Restmüll. Der Energieaufwand beträgt ca. 5% vom Energieertrag mit Trocknung 15%.

Bei der eingangs beschriebenen Perkolation nach den Patentschriften EP 0876311 B1 und WO 00/27777 beträgt die Behandlungszeit im Reaktor mindestens 2 Tage mit einer Umlaufwassermenge von 30001/1Mg Restmüll und die Umsetzung zu Biogas im Fermenter beträgt maximal 5 Tage. Zellstoffverbindungen werden nicht abgebaut. Die Gasproduktion beträgt ca. 70Nm³/1Mg Restmüll. Der Methangehalt beträgt 70%. Die Abluftmenge pro 1 Mg Restmüll beträgt ca. 1000m³.

Bei einer Reststoffvergärung nach den Patentschriften EP 0 476 217 B1 und EP 0192 900 B1 beträgt die Behandlungszeit im Gasreaktor mindestens 20 Tage mit einer Umlaufmenge von Impfschlamm von 20 % des Gesamtinhaltes. Pro 1Mg zugeführten Restmüll werden 25m³ Fass-/Raumvolumen benötigt. Zellstoff und Ligninverbindungen werden nach einer Anfahrtszeit von 18 bis 30 Tagen teilweise abgebaut. Die Gasproduktion beträgt ca. 100 Nm³/1Mg Restmüll. Der Methangehalt beträgt 55 - 60 %. Die Abluftmenge pro 1Mg. Restmüll beträgt ca. 8000 m³. Energieaufwand ca. 30 % vom Energieertrags.

Ein weiteres bekanntes Extraktionsverfahren ist die Druckentspannungsexplosion bei welcher die Gewebezellen vorwiegend im Schlachtabfallbereich in einem Durchlaufautoklaven bei 350°C und einem Überdruck von ca. 18bar zwei Stunden gehalten werden. Nach der Haltezeit wird stossweise eine kleine Menge entspannt. Durch den Entspannungsdruck werden die Zellmembranen zerstört und die Schlachtabfälle können einer Vergärung zugeführt werden. Die hohen Temperaturen und die Haltezeit dienen vor allem der Zerstörung der Prionen welche den Rinderwahnsinn (BSE) erzeugen. Pro 1Mg Schlachtabfälle werden ca. 40m³ Faulraumvolumen benötigt. Ligninverbindungen werden nur teilweise abgebaut. Die Gasproduktion beträgt ca. 300Nm³ / 1Mg Schlachthofabfälle. Die Abluftmenge pro 1Mg beträgt ca. 10.000 m³. Der Energieaufwand liegt bei ca. 50% vom Energieertrag.

In Figur 2 ist eine Mindestausrüstung zur Durchführung eines Vakuumsiedetrocknungsprozesses für die Trocknung, Stabilisierung und Hygienisierung von Stoffen wie z.B:
- Restmüll,
- Ausgangsstoffgemische aus der Siedeextraktion, Perkolation
- Schlämme aus Klärwerken und Faulschlämme aus Vergärungsanlagen
- Produkte und Abfälle aus der Lebensmittelindustrie
- Produktionsschlämme aus der Farbenindustrie, Chemie und der Metallverarbeitung gezeigt.

In einen Siedetrockner 42 wird das Feuchtgut 1, 22, 60 eingebracht und mit einer Rührvorrichtung 8 bewegt, vermischt und transportiert. Die Wärmezufuhr zur Erreichung der Siedetemperatur erfolgt über die Mantelheizung 4. Die Prozesswärmeaufbereitung erfolgt wieder über die Wärmeerzeugungsanlage 26 mit welcher die Wärmeenergie 28 in Form von Warmwasser, Druckheisswasser, Thermoöl oder Dampf erzeugt wird.

Als Energieträger 24 kann, das eigenerzeugte Biogas aus dem Siedeextraktionsprozess eingesetzt werden, und / oder auch andere fossile Brennstoffe oder elektrische Energie verwendet werden.

Beim Sieden im Siedetrockner 42 wird durch Unterdruck der Siedepunkt deutlich unter 100°C gehalten und die Manteltemperatur 4 je nach Feuchtgut 1, 22, 60 auf ein Temperaturniveau derart eingestellt, dass sich keine Verbackungen an den Heizflächen einstellen, damit der Wärmeübertrag ohne Verluste in das Feuchtgut 1, 22, 60 eingetragen wird.

Der Betrieb des Siedetrockners 42 entspricht im wesentlichen dem Betrieb des in Figur 1 dargestellten Siedeextraktors 2 mit der Ausnahme, dass kein Prozesswasser 6 zugeführt wird. Der Einfachheit halber hinsichtlich der Grundfunktionen des Siedetrockners 42 auf die entsprechenden Ausführungen zum Siedeextraktor 2 verwiesen.

Je nach Eintrittstemperatur und Wärmekapazität des Feuchtgutes 1, 22, 60 ist die Aufheizzeit im Siedetrockner 42 unterschiedlich und kann auch durch Vorerwärmung des Feuchtgutes 1, 22, 60 ausserhalb des Siedetrockners 42 wesentlich verkürzt werden (Vorrichtung nicht dargestellt). Nach der Erwärmung auf Betriebstemperatur dauert der eigentliche Trocknungsprozess je nach Feuchte des Feuchtguts 1, 22, 60 zwischen 1,5 bis 3 Stunden.

Durch eine Temperatureinwirkung bei mehr als 90°C über eine Stunde Haltezeit ist das Trockenprodukt 50 dann hygienisiert und kann human medizinisch unbedenklich gehandhabt, gelagert und weiteren Arbeitsschritten zugeführt werden.

Das Trockenprodukt 50 verlässt den Siedetrockner 42 mit einer Austrittstemperatur von ca. 60 bis 80°C. Mittels der symbolisch dargestellten Massenstromumlenkung 62 kann das warme Trockengut 50 zwischengelagert oder weiterbehandelt werden. Falls aber für die anschliessende Weiterbehandlung eine tiefere Materialtemperatur erwünscht wird, wird das warme Trockengut 50 einem Kühltrockner 52 zugeführt. Der Kühltrockner 52 besteht aus einem dichten Gehäuse mit einem innenliegenden perforiertem Transportband 56 mit welchem das Trockengut 50 (Kuchen) vom Eintritt zum Austritt gefördert wird.

Die mit Wärme und Restfeuchte aus dem Trockengut 50 beladene Abluft 78 wird in einem Kühler / Kondensator 66 abgekühlt und entfeuchtet. Das Kondensat 68 wird der Abwasserbehandlung (Figur 8) zugeführt. Mit einem Umluftventilator 70 wird die gekühlte und entfeuchtete Trocknungsluft 80 durch das perforierte Transportband 56 und den Materialkuchen 50 geleitet. Das gekühlte Trockengut 72 verlässt den Kühltrockner 52 über eine nicht dargestellte Schleuse und Austragsvorrichtung. Der Luftkreislauf 78, 80 ist geschlossen, es entstehen praktisch keine Abluftmengen oder Abgase.

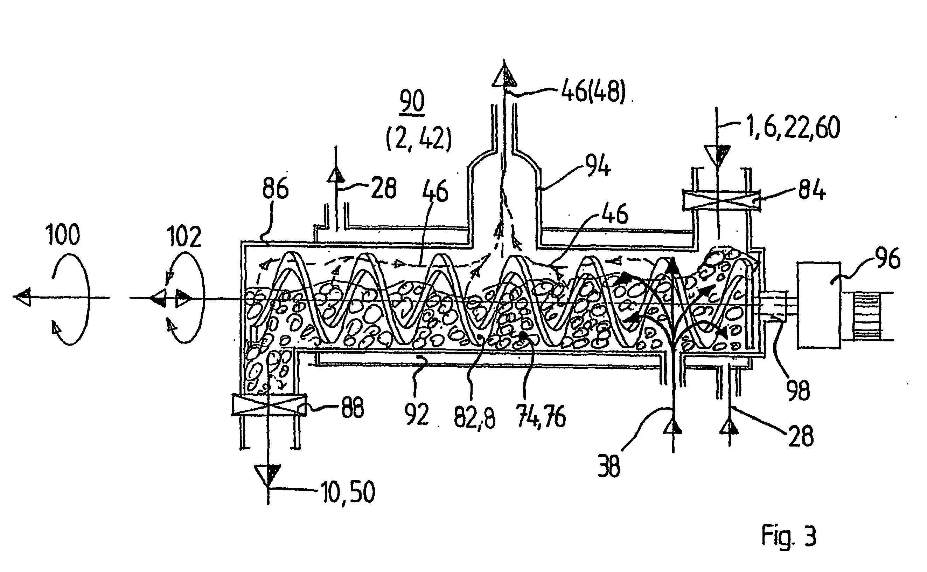

Die Figur 3 zeigt ein Grundmodul 90 eines Reaktors, der als Siedeextraktor 2 oder als Siedetrockner 42 verwendbar ist. In diesem Grundmodul 90 können beide Funktionen wie Siedeextraktion 2 und Siedetrockung 42 durchgeführt werden. Das Kernstrück bildet die seelenlose Förder- und Umwälzspirale 82 welche zugleich die Rührerfunktion 8 übernimmt. Mit dieser Umwälzspirale 82 wird der Inhalt 74, 76 schonend bewegt und durch die Materialbewegung 100, 102 die Heizfläche 4 von Anbackungen frei gehalten und damit der Wärmeübertrag vom Heizungsmedium 28 in das zu erwärmende Feuchtgut oder in die Suspension 74 sichergestellt.

Zusammenfassend bedeutet das, dass die Inhaltsstoffe 74, 76 bei beiden Prozessen 2, 42 zusammen mit der Rührbewegung 100, 102 der Spirale 82 die Wärmeaustauschfläche des Reaktors 2, 42 vor Verschmutzungen ständig abreinigen und bedingt durch die Geometrie der Spirale 82, 8 sich keine Bänder, Kordel oder andere langfaserige Teile oder Stoffe aufwickeln oder zu Zopfbildungen führen können.

Die Umwälzspirale 82 wird durch mindestens einen Antrieb 96 bewegt und eine spezielle Dichtungsbuchse 98 verhindert den Eintritt von Leckageluft. Über den Eintrittsschieber oder die Schleuse 84 werden die Zuschlagmaterialien 1, 6, 22, 60 zugeführt und nach Beendigung der Durchlaufzeit über den Austrittsschieber oder die Schleuse 88 das Produkt 10, 50 ausgetragen.

Durch das über die Pumpen 40, 44 (Figur 1, 2) eingestellte Vakuum wird der Siedepunkt im Siedeextraktor 2 oder Siedetrockner 42 auf deutlich <100°C gesetzt und die Brüden 46, 48 verlassen über einen Dampfdom / Brüdenabzug 94 den Reaktor 2, 42 (90). Um bei der Siedeextraktion die Suspension 74 kurzfristig auf Betriebstemperatur zu erwärmen, kann zusätzlich zur Mantelheizung 92, 4 Dampf 38 eingeblasen werden.

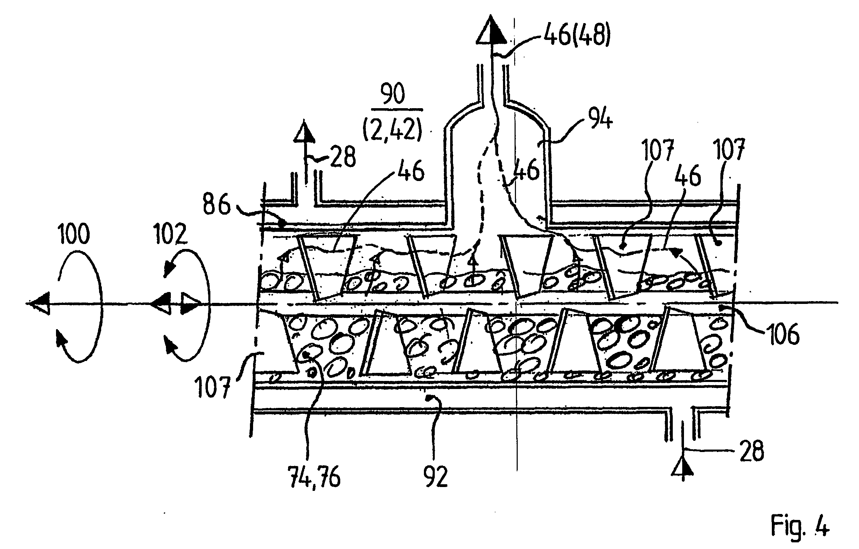

Die Figur 4 zeigt ein Ausführungsbeispiel mit einem Rührwerk 106 mit Zentralachse und sich überlagernden Rührwerksschaufeln 107 welche während der Rotation durch die schiffsschraubenähnliche Anordnung die Heizflächen 92 des Reaktors mit Hilfe des schleissenden Feuchtguts 76 oder der Suspension 74 von Anbackungen freihalten. Das Rührwerk 106 kann auch mit Rührwerksschaufeln 107 ähnlich wie bei den bereits bekannten Autoklaven zur Herstellung von Tiermehl aus Schlachtabfällen oder bei Scheibentrocknern zur Trocknung von Schlämmen durch ein Heizmedium 28 erwärmt werden (hier nicht zeichnerisch dargestellt).

Vorstehend vorgestellt ist eine Vorrichtung zur Durchführung zweier Verfahren wie:
- die Siedeextraktion gemäss Figur 1
- die Siedetrocknung gemäss Figur 2.

Diese beiden Prozessschritte können nacheinander in ein und derselben Vorrichtung 90 erfolgen ohne dass die Inhaltsstoffe den Reaktor 90 zwischen den Schritten verlassen müssen.

Bei Grossanlagen ist es jedoch zweckmässig, wenn die Schritte in zwei getrennten Prozessbehältern 2, 42 durchgeführt werden, da die Prozesse Siedeextraktion 2 und Siedetrocknung 42 unterschiedliche Verweil- und Behandlungszeiten aufweisen und ein dazwischengeschalteter Entwässerungsschritt 14 den Verdampfungsenergieaufwand energetisch wie zeitlich reduziert.

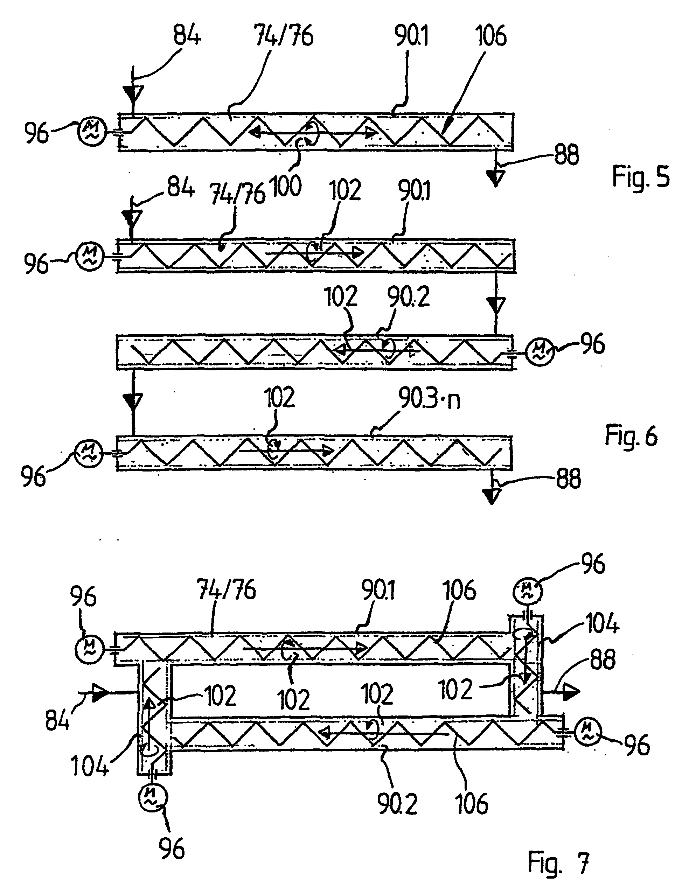

Die Figuren 5 bis 6 zeigen Anordnungsbeispiele für die Siedeextraktion 2 und die Siedetrocknung 42.

Die Figur 5 zeigt einen Reaktor 90, welcher diskontinuierlich befüllt 84 und entladen 88 wird. Der zu behandelnde Inhaltsstoff 74, 76 wird durch den Antrieb 96 mit dem Rührwerk 106 vor- und rückwärts bewegt (Pfeil 100) bis der Prozess abgeschlossen ist. Diese Anordnung und Betriebsweise eignet sich vor allem für Klein- und Einzelanlagen bei welchen z. B. in einer Tagesschicht zwei bis drei Durchgänge gefahren werden.

Die Figur 6 zeigt eine hintereinandergeschaltene Anordung von mehreren Reaktorstufen oder Reaktorteilabschnitten, in denen die einzelnen Chargen kontinuierlich beladen 84, behandelt und entladen 88 werden. Damit bei den Verschiebevorgängen 102 das Vakuum erhalten bleibt, werden die Stufen voneinander durch Schieber oder Schleusen getrennt. Die einzelnen Reaktorabschnitte können in beliebiger Anzahl 90.1 - 90.m in Reihe geschaltet werden.

Die Figur 7 zeigt eine Anordnung in welcher der zu behandelnde Inhaltsstoff 74, 76 in einem geschlossenen Kreislauf zirkuliert. Nach diesem Ausführungsbeispiel sind 2 etwa prallel angeordnete Reaktorteilabschnitte 90.1, 90.2 über Verschiebebauteile 104 miteinander verbunden. Die beiden Reaktorteilabschnitte 90.1, 90.2 haben jeweils ein Rührwerk 106 mit einem Antrieb 96, wobei die Förderrichtung in den beiden Teilabschnitten 90.1, 90.2 entgegengesetzt ausgeführt ist (Pfeil 102).

Zwischen den beiden Teilabschnitten 90.1, 90.2 sind die Verschiebebauteile 104 vorgesehen, über die die jeweils benachbarten Endabschnitte der Teilabschnitte 90.1, 90.2 miteinander verbunden sind, so dass sich die dargestellte Kreislaufführung ergibt. Das aufzubereitende Material wird über den Materialeintrag 84 zugeführt und über den Materialaustrag 88 aus dem Reaktor abgeführt.

Wie bei der Anordnung gemäss Figur 1 handelt es sich hier um einen diskontinuierlichen Betrieb, bei welchem aber durch die gleichförmige Rotation der Inhaltsstoff vergleichmässigt (mit der dem Prozess dienlichen Füllhöhe) durch die Vorrichtungen (90.1, 90.2, 104) gefördert werden.

Die in Figur 7 dargestellte Anordnung eignet sich für den Durchsatz von grossen Mengen, welche z. B. in mehreren Schichten gefahren werden und kann beim Einsatz von mindestens drei Vorrichtungen mit den entsprechenden Volumenpuffern praktisch im kontinuierlichen Betrieb gefahren werden.

Die Figur 8 zeigt eine Kombination des Siedeextraktionsprozesses gemäss Figur 1 und des nachgeschalteten Siedetrocknungsprozesses gemäss Figur 2 in Verbindung mit einer Biogasanlage 20, einer Abwasserreinigungsanlage 36 und einer Abluftbehandlungsanlage 30.

Nachfolgend werden die Kombinationen und Verknüpfungen beschrieben, auf welche in den Figuren 1 und 2 bisher nicht eingegangen wurde.

Restmüll oder andere organisch belastete Abfallstoffe 1 können wahlweise der Siedeextraktion 2 oder auch direkt zur Trocknung dem Siedetrockner 42 zugeführt werden. Pastöse oder flüssige Schlämme 60 können dem Siedetrockner 42 direkt zugeführt werden oder als Mischung 62 mit dem Presskuchen 22 und Restmüll 1 als Zuschlagstoffe oder als Einzelkomponente zugeführt werden.

Die am Siedetrockner und am Siedeextraktor 2 anfallenden Brüden 48, 46 werden über die Vakumerzeuger 40 einem voroder nachgehaltenen Kühler / Kondensator 66 zugeführt, in welchem die Brüden 48, 66 auskondensiert und von dem Abgas 54 getrennt werden. Das Kondensat 68 wird einer Abwasseraufbereitungsanlage 36 zugeführt. Die anfallenden Abgase werden, je nach Zusammensetzung und Schadstoffanteil einer Abluftreinigung 30 oder zur Nachverbrennung der Brennerzuluft für die Wärmeerzeugungsanlage 26 beigemischt. Das organisch hochbelastete Presswasser 18 aus der Extraktion 2 wird zur Entfrachtung und Biogaserzeugung 24 der Biogasanlage 20 zugeführt. Das Biogas 24 kann dann anderen Energieverwertungen, wie z.B. einer Wärmekraftkopplungsanlage zur Stromerzeugung zugeführt werden.

Das entfrachtete Gärwasser 32 aus der Biogasanlage 20 wird als Prozesswasser / Umlaufflüssigkeit der Extraktion 2 als Auswaschflüssigkeit 6 wieder zugeführt. Das Überschusswasser 34 aus der Biogasanlage (Fermentation) 20 wird in der Abwasserbehandlung 36 zusammen mit dem Brüdenkondensat 68 aufbereitet und als gereinigtes Abwasser 105 in die Kanalisation oder einen Vorfluter geleitet.

Um sich die Aufheizenergie in Form von Brennstoffen zu sparen, besteht die Möglichkeit die, mit Organik belasteten Inputströme 1, 60, 22 vor dem Eintrag in die Reaktoren (Extraktor, Trockner) 90 in einer Intensivrottebox (Aufgabebehälter) 108 durch Begasung mit Luft 110 oder mit technischem Sauerstoff 111 durch biologisch erzeugte aerobe Erwärmung kurzfristig auf die gewünschte Betriebstemperatur voreinzustellen. Gleichzeitig mit der aeroben Erwärmung stellt sich eine biologisch erzeugte Hydrolyse (Versäuerung) ein, bei welcher durch biochemischen Aufschluss und Erhöhung der biochemischen Verfügbarkeit bei den nachfolgenden Behandlungsschritten in den Reaktoren 90 die Auswaschrate bei der Extraktion 2 und der Wasserentzug bei der Trocknung 42 wesentlich erhöht wird.

Damit der zu behandelnde Abluftstrom 54 so klein wie möglich gehalten werden kann, eignet sich vor allem die Begasung mit technisch angereichertem Sauerstroff 111. Die Abluft 54 wird aus den Aufgabebehältern (Rotteboxen) 108 abgezogen und den vorbeschriebenen Abluftbehandlungen 30, 26 zur Entfrachtung bzw. Verbrennung zugeführt.

Bei dem vorgestellten Verfahren zur Behandlung von organisch belastetem Restmüll 1 und anderen organisch belasteten Abfallstoffen 22, 60 werden durch Vakuumeinwirkungen 46, 48 und Erwärmung 4, 26, 28 die wasserführenden Zellen der Membranen aufgerissen, so dass das Zellwasser, wie bei dem Vakuumsiedextraktionsprozess (Figur 1) im Siedeextraktor 2, innerhalb von wenigen Minuten zur Auswaschung der Organikanteile 18 zur Verfügung steht und in einer Biogasanlage 20 zu Biogas 24 umgesetzt wird.

Dasselbe geschieht bei der Vakuumsiedetrocknung (Figur 2) bei der das freigesetzte Zellwasser zusammen mit dem freien Wasser, welches sich an den Oberflächen des zu trocknenden Nassgutes 76 befindet durch Sieden unter Vakuum als Brüden 46 den Trockner 90 verlässt.

Dieser Zellaufschluss wurde bis jetzt bei organisch belastetem Restmüll 1 und an deren Stoffgemischen 74, 76 durch folgende bekannte Verfahren umgesetzt:

### 1. Biologischer Aufschluss durch Versäuerung (Hydrolyse)

in der ersten Phase eines aeroben Kompostierprozesses bei welchem unter Einstellung folgender Parameter wie:
- Feuchtigkeitsregulierung
- Lufteintrag
- mechanische Umwälzung
durch bakterielle Einwirkungen bei optimalen Verhältnissen der Zellaufschluss ab dem zweiten Behandlungstag beginnt und je nach Materialzusammensetzung zwischen dem dritten und fünften Tag die höchstmögliche Aufschlussrate erreicht hat.

### 2. Thermisch-physiklischer Aufschluss

Durch Erhitzung in einem Autoklaven auf 120 bis ca. 350°C bei einem Überdruck ab 2,0 bis 15 bar mit nachfolgender explosionsartiger Entspannung in ein Auffang- und Entspannungsgefäss. Dieser Vorgang wird als Druckentspannungsexplosion bezeichnet. Bei beiden Verfahren wird der Zellaufschluss benutzt, um das freigesetzte Zellwasser durch Auswaschung auszutragen un in einer Biogasanlage in Biogas umzusetzen. Nach Beendigung des Auswaschprozesses wird das Austragsmaterial meistens einem Entwässerungsschritt zugeführt und der Reststoff kompostiert und/oder in einer herkömmlichen thermischen oder biologischen Trocknung das Wasser entzogen.

Im Vergleich zu den vorstehend angeführten und bereits bekannten Verfahren 1 u. 2 entstehen bei der Siedeextraktion 2 und der Siedetrocknung 42 keinerlei nennenswerte Abluftströme. Es entstehen max 1,0m³ Abluft 54 pro 1000 kg zugeführtem Produkt 74, 76. Für den Wasserentzug von 1000kg über die Brüden 46, 48 beträgt der thermische Energieaufwand max. 150 kWh und der elektrische Energieaufwand max 10 kWh. Die Gasproduktion bei der Behandlung von 1000 kg Restmüll beträgt je nach Organikanteil ca. 200 Nm³ Biogas oder 1.300 kWh Wärmeertrag.

Bei den bekannten Verfahren 1 und 2 beträgt der hochbelastete Abluftstrom ca. 3000 m³ pro 1000 kg Produkt 74, 76.

Der thermische Energieaufwand beträgt mindestens 280 kWh und der elektrische Energieaufwand zusätzlich 24 kWh.

Offenbart sind ein Verfahren zur Aufbereitung von Restmüll und anderen organisch belasteten Abfallstoffen und eine Restmüllaufbereitungsanlage, bei der ein organische Bestandteile enthaltender Abfallstoff in einem Reaktor unter Vakuum auf den Siedetemperaturbereich von Wasser erwärmt wird, so dass Membranen von wasserführenden Zellstrukturen zerstört und das organisch hochbelastete Zellwasser mit dem Brüden abführbar ist.

### Bezugszeichenliste:

- 1: Restmüll oder andere organisch belastete Abfallstoffe mit einem Trockenstoffgehalt > 30%
- 2: Siedeextraktor
- 4: Außenheizung
- 6: Prozesswasser (Frischwasser oder Umlaufwasser aus der Biogasanlage)
- 8: Rühr- und Transportvorrichtung
- 10: thermisch stabilisierter Restmüll / Wassergemisch
- 12: Entwässerung
- 14: Entwässerungseinrichtung
- 16: Kühlmediumerzeuger
- 18: organisch hoch belastetes Prozeßwasser
- 20: Biogasanlage
- 22: Presskuchen
- 24: Biogas oder andere Energieträger
- 26: Wärmeerzeugungsanlage
- 28: thermische Energie
- 30: Abluftreinigung
- 32: Gärwasser
- 34: Überschußwasser
- 36: Abwasserreinigungsanlage
- 38: Dampf
- 40: Vakuumpumpe zu Siedeextraktor
- 42: Vakuumsiedetrockner
- 44: Vakuumpumpe zu Siedetrockner
- 46: Brüden (Vakuumtrockner)
- 48: Brüden (Siedereaktor)
- 50: getrockneter und warmer Restmüll oder andere Abfallstoffe
- 52: Kühltrockner
- 54: Abgase
- 56: Kratzboden oder Transportband
- 60: Schlämme und andere pastöse Produktions und Abfallstoffe mit einem Trockenstoffgehalt < 40%
- 62: Massenstromumleitung / Mischer
- 66: Brüdenkondensator / Kühler
- 68: Kondensat in Abwasserbehandlung
- 70: Umluftventilator
- 72: getrockneter und kalter Restmüll oder andere Abfallstoffe
- 74: Suspension [Materialgemisch für Siedeextraktion (Mischung 1 und 6)]
- 76: Material zum Vakuumtrocknen (Mischung (1, 22, 60))
- 78: Wasserdampfbeladene Umluft
- 80: Entfeuchtete Kühlluft
- 82: Förder- und Umwälzspirale
- 84: Materialeingang mit Schieber
- 86: Mantelrohr
- 88: Materialaustrag mit Schieber
- 90: Siedeextraktor und/oder Vakuumtrockner
- 92: Heizmantel, Heizflächen
- 94: Brüdenabzug
- 96: Antrieb
- 98: Vakuumdichte Wellendurchführung
- 100: Materialvorschub in eine Richtung
- 102: Materialvorschub und Rückschub
- 103: Energieverwertung für Überschussbiogas
- 104: Verschiebe-, Entlade- und Beladebauteil
- 105: Gereinigtes Abwasser
- 106: Rührwerk
- 107: Rührwerkschaufeln
- 108: Aufgabebehälter / Biologische Vorwärmung
- 109: Dosiervorrichtung
- 110: Lufteintrag
- 111: Sauerstoffeintrag

## Patentansprüche

1. Verfahren zum Aufbereiten von Abfallstoffen, wobei organische Bestandteile der Abfallstoffe in einem Reaktor (2,42,90)ausgetrieben werden, mit den Schritten:
- Einbringen der Abfallstoffe (1) in den Reaktor (2,42,90)
- Erwärmen der Abfallstoffe (1) unter Vakuum auf eine Siedetemperatur von Wasser
- Beaufschlagen der im Reaktor (2, 42, 90) aufgenommenen Abfallstoffe (1) mit Scherkräften über eine Rühreinrichtung (106) oder dgl.
- Zerstören von Membranen von wasserführenden Zellstrukturen der organischen Bestandteile und Austreiben des entstehenden, organische Bestandteile enthaltenden Brüden (46, 48).

2. Verfahren nach Patentanspruch 1, wobei bei einer Siedeextraktion dem als Siedeextraktor (2) wirkenden Reaktor Wasser (6) oder eine andere geeignete Auswaschflüssigkeit zugeführt wird und ein Anteil der organischen Bestandteile mit dem Wasser (6) ausgewaschen und ein Teil der organischen Bestandteile und/oder als Ammoniak gebundener Stickstoff über Kopf mit dem entstehenden Brüden (48) ausgetrieben wird.

3. Verfahren nach Patentanspruch 2, wobei sich an die Siedeextraktion eine Siedetrocknung mit den Mermalen des Patentanspruchs 1 anschliesst.

4. Verfahren nach einem der vorhergehenden Patentansprüche, wobei einer Siedetrocknung nach Patentanspruch 1 oder einer Siedeextraktion mit den Merkmalen des Patentanspruchs 2 eine Vorerwärmung (108) des Abfallstoffs (1) vorgeschaltet ist.

5. Verfahren nach Patentanspruch 4, wobei die Vorerwärmung (108) durch einen aeroben Rotteprozess erfolgt.

6. Verfahren nach einem der vorhergehenden Patentansprüche, wobei der Brüden (46, 48) einem Kondensator, vorzugsweise einem Kühler (66) zugeführt wird.

7. Verfahren nach Patentanspruch 6, wobei während des Prozesses entstehende Leckageluft in einem Brenner (26) verbrannt oder einer Aufbereitung zugeführt wird.

8. Verfahren nach einem der Patentansprüche 2 bis 7, wobei organisch belastete Auswaschflüssigkeit einer Biogasanlage (20) zugeführt wird.

9. Verfahren nach Patentanspruch 8, wobei in der Biogasanlage entfrachtetes Gärwasser (32) als Umlauf- oder Prozeßwasser (6) zum Siedereaktor (2) zurückgeführt wird.

10. Verfahren nach Patentanspruch 8 oder 9, wobei das entstehende Biogas (24) zur Erzeugung von Prozesswärme oder von elektrischer Energie verwendet wird.

11. Verfahren nach einem der vorhergehenden Patentansprüche, wobei im Anschluß an eine Siedetrocknung mit den Merkmalen des Patentanspruchs 1 eine Kühltrocknung des warmen Trockenguts erfolgt.

12. Verfahren nach Patentanspruch 2 und 3, wobei die Siedetrocknung und die Siedeextraktion in dem gleichen Reaktor (2,42,90) durchgeführt werden.

13. Aufbereitungsanlage zur Aufbereitung organische Bestandteile enthaltender Abfallstoffe (1) insbesondere zur Durchführung des Verfahrens nach einem der vorhergehenden Patentansprüche, mit einem beheizbaren Reaktor (2,42,90), der unter Vakuum auf eine Siedetemperatur von Wasser (6) oder einer anderen Auswaschflüssigkeit bringbar ist und der einen Abfallstoffeintrag (84), einen Materialaustrag (88), einen Vakuumanschluß, eine Heizung (92), einen Brüdenaustritt (94) und eine Einrichtung zum Einbringen von Scherkräften, insbesondere ein Rührwerk (106) hat.

14. Aufbereitungsanlage nach Patentanspruch 13, wobei der Reaktor ein Siedeextraktor (2) mit einem Auswaschflüssigkeitseintritt (84) ist.

15. Aufbereitungsanlage nach Patentanspruch 13, wobei der Reaktor ein Siedetrockner (42) zum Entwässern der Abfallstoffe ist.

16. Aufbereitungsanlage nach Patentanspruch 15, wobei dem Siedetrockner (42) ein Vorerwärmer (108) vorgeschaltet ist.

17. Aufbereitungsanlage nach Patentanspruch 14 und 15, wobei der Siedetrockner (2) und der Siedetrockner (42) durch den gleichen Reaktor (2,42,90) ausgebildet sind.

18. Aufbereitungsanlage nach einem der Patentansprüche 14 bis 18, mit einer Biogasanlage (20) zur Aufbereitung des beladenen Auswaschwassers.

19. Aufbereitungsanlage nach Patentanspruch 18, mit einer Umlaufeinrichtung zur Rückführung von in der Biogasanlage (20) anfallenden Gärwasser (32) als Prozesswasser (6).

20. Aufbereitungsanlage nach einem der Patentansprüche 15 bis 19, mit einem Kühltrockner zur Nachtrocknung des warmen Trockenguts.

21. Aufbereitungsanlage nach einem der Patentansprüche 13 bis 20, mit einem Kondensator (66) für den Brüden (46,48).

22. Aufbereitungsanlage nach einem der Patentansprüche 13 bis 21, wobei das Rührwerk (106) einen Rührer hat, über den die Abfallstoffe vom Eintritt zum Austritt förderbar sind.

23. Aufbereitungsanlage nach Patentanspruch 22, wobei das Rührwerk (106) Rührelemente hat (107), über die Material von einer Innenumfangswandung des Reaktors (2,42,90) abstreifbar ist.

24. Aufbereitungsanlage nach Patentanspruch 23 oder 24, wobei das Rührelement (107) schneckenförmig mit oder ohne Zentralwelle ausgebildet ist

25. Aufbereitungsanlage nach einem der Patentansprüche 22 bis 24, wobei die Förderrichtung des Rührwerks (106) umdrehbar ist.

26. Aufbereitungsanlage nach einem der Patentansprüche 22 bis 25, wobei das Rührelement (107) beheizt ist.

27. Aufbereitungsanlage nach einem der Patentansprüche 14 bis 26, wobei der Abfallstoffeintrag und der Auswaschflüssigkeitseintritt als gemeinsamer Eintritt (84) ausgebildet sind.

28. Aufbereitungsanlage nach einem der Patentansprüche 13 bis 27, mit einem Dampfeintritt zur Zuführung von Heizdampf (84).

29. Aufbereitungsanlage nach Patentanspruch 22, wobei der Reaktor (2,42,90) zumindest zwei Teilabschnitte (90.1, 90.2) hat, in denen jeweils ein Rührwerk (106) angeordnet ist.

30. Aufbereitungsanlage nach Patentanspruch 29, wobei die beiden Teilabschnitte (90.1, 90.2) über Verschiebebauteile (104) miteinander verbunden sind, so daß das Material im Kreislauf förderbar ist.

31. Aufbereitungsanlage nach einem der Patentansprüche 15 bis 28, wobei dem Siedetrockner (42) eine Klassierpresse (14) nachgeschaltet ist.

32. Aufbereitungsanlage nach einem der Patentansprüche 13 bis 31, mit einer Abwasserreinigungsanlage (36) zur Aufbereitung von während des Prozesses anfallendem Abwasser.

## Revendications

1. Procédé permettant de traiter des déchets, dans lequel des composants organiques des déchets sont expulsés dans un réacteur (2, 42, 90) au cours des étapes suivantes :
- Chargement des déchets (1) dans le réacteur (2, 42, 90),
- Chauffage des déchets (1) sous vide à une température d'ébullition de l'eau,
- Alimentation des déchets (1) réceptionnés dans le réacteur (2, 42, 90) avec des efforts de cisaillement au moyen d'un dispositif d'agitation (106) ou similaire,
- Destruction de membranes de structures cellulaires aquifères des composants organiques et expulsion de la vapeur (46, 48) contenant des composants organiques qui en émane.

2. Procédé selon la revendication 1 dans lequel, lors d'une extraction à température d'ébullition, de l'eau (6) ou un autre liquide de lavage adapté, est amené(e) au réacteur agissant comme un extracteur à ébullition (2) et une partie des composants organiques est lavée avec l'eau (6) et une partie des composants organiques et/ou de l'azote fixé comme de l'ammoniaque, est expulsée au-dessus de la tête avec la vapeur qui en émane (48).

3. Procédé selon la revendication 2, dans lequel un séchage à température d'ébullition est raccordé à l'extraction à température d'ébullition avec les caractéristiques de la revendication 1.

4. Procédé selon l'une des revendications précédentes, dans lequel un chauffage préalable (108) des déchets est effectué en amont d'un séchage à température d'ébullition selon la revendication 1 ou d'une extraction à température ébullition avec les caractéristiques de la revendication 2.

5. Procédé selon la revendication 4, dans lequel le chauffage préalable (108) s'effectue au moyen d'un processus d'épuration aérobie.

6. Procédé selon l'une des revendications précédentes, dans lequel la vapeur (46, 48) est introduite dans un condensateur, de préférence un refroidisseur (66).

7. Procédé selon la revendication 6, dans lequel au cours du processus, l'air qui s'échappe est brûlé dans un brûleur (26) ou mis en traitement.

8. Procédé selon l'une des revendications 2 à 7, dans lequel du liquide de lavage chargé de composants organiques est amené à une installation de Biogaz (20).

9. Procédé selon la revendication 8, dans lequel dans l'installation de Biogaz, de l'eau de fermentation non chargée (32) est renvoyée vers le réacteur à ébullition (2) comme une eau de circulation ou de traitement (6).

10. Procédé selon la revendication 8 ou 9, dans lequel le Biogaz qui en émane (24) est utilisé pour la production de chaleur de traitement ou d'énergie électrique.

11. Procédé selon l'une des revendications précédentes dans lequel, à la suite d'un séchage à température d'ébullition avec les caractéristiques de la revendication 1, il se produit un séchage à température de refroidissement de la matière à sécher chaude.

12. Procédé selon les revendications 2 et 3, dans lequel le séchage à température d'ébullition et l'extraction par ébullition sont réalisés dans le même réacteur (2, 42, 90).

13. Installation de traitement pour le traitement de déchets contenant des composants organiques (1) en particulier pour la réalisation du procédé selon l'une des revendications précédentes, avec un réacteur pouvant être chauffé (2, 42, 90), qui peut être amené sous vide à une température d'ébullition de l'eau (6) ou d'un autre liquide de lavage et qui est équipé d'une admission des déchets (84), d'une évacuation des matières (88), d'un raccordement au vide, d'un chauffage (92), d'une sortie de vapeur (94) et d'un dispositif pour la mise en opération d'efforts de cisaillement, en particulier un mélangeur (106).

14. Installation de traitement selon la revendication 13, dans laquelle le réacteur est un extracteur par ébullition (2) avec une admission de liquide de lavage (84).

15. Installation de traitement selon la revendication 13, dans laquelle le réacteur est un séchoir à température d'ébullition (42) servant à l'assèchement des déchets.

16. Installation de traitement selon la revendication 13, dans laquelle un appareil de préchauffage (108) est intercalé avant le séchoir à température d'ébullition (42).

17. Installation de traitement selon les revendications 14 et 15 dans laquelle le séchoir à température d'ébullition (2) et le séchoir à température d'ébullition (42) sont formés par le même réacteur (2, 42, 90).

18. Installation de traitement selon l'une des revendications 14 à 18, avec une installation de Biogaz (20) pour le traitement de l'eau de lavage chargée.

19. Installation de traitement selon la revendication 18, avec un dispositif de circulation pour le recyclage de l'eau de fermentation (32) produite dans l'installation de Biogaz (20) comme eau de traitement (6).

20. Installation de traitement selon l'une des revendications 15 à 19 avec un séchoir à température de refroidissement pour le séchage final de la matière sèche chaude.

21. Installation de traitement selon l'une des revendications 13 à 20 avec un condensateur (66) pour la vapeur (46, 48).

22. Installation de traitement selon l'une des revendications 13 à 21 dans laquelle le mélangeur (106) présente un agitateur sur lequel les déchets peuvent être acheminés depuis l'entrée jusqu'à la sortie.

23. Installation de traitement selon la revendication 22 dans laquelle le mélangeur (106) est équipé d'éléments de mélange (107) sur lesquels il est possible d'enlever du matériau d'une paroi périphérique interne du réacteur (2, 42, 90).

24. Installation de traitement selon la revendication 23 ou 24 dans laquelle l'élément de mélange (107) est configuré sous forme hélicoïdale avec ou sans broche centrale.

25. Installation de traitement selon l'une des revendications 22 à 24 dans laquelle le sens de transport du mélangeur (106) peut pivoter.

26. Installation de traitement selon l'une des revendications 22 à 25 dans laquelle l'élément de mélange (107) est chauffé.

27. Installation de traitement selon l'une des revendications 14 à 26 dans laquelle l'admission des déchets et l'entrée du liquide de lavage sont configurées comme une entrée commune (84).

28. Installation de traitement selon l'une des revendications 13 à 27, avec une entrée de vapeur pour l'introduction de vapeur de chauffe (84).

29. Installation de traitement selon la revendication 22 dans laquelle le réacteur (2, 42, 90) a au moins deux tronçons partiels (90.1, 90.2) dans lesquels est chaque fois disposé un mélangeur (106).

30. Installation de traitement selon la revendication 29 dans laquelle les deux tronçons partiels (90.1, 90.2) sont reliés les uns aux autres par des composants coulissants (104) de sorte que le matériau peut être acheminé dans le circuit.

31. Installation de traitement selon l'une des revendications 15 à 28 dans laquelle le séchoir à température d'ébullition (42) est intercalé après une presse à calibrer (14).

32. Installation de traitement selon l'une des revendications 13 à 31 avec une installation d'épuration des eaux usées (36) pour le traitement des eaux usées produites pendant le processus.

## Claims

1. Method for processing waste substances, wherein organic constituents of the waste substances are expelled in a reactor (2, 42, 90), comprising the steps of:
- introducing the waste substances (1) into the reactor (2, 42, 90)
- heating the waste substances (1) under vacuum to a boiling temperature of water
- applying shear forces to the waste substances (1) received in the reactor (2, 42, 90) via a stirring device (106) etc.
- destroying membranes of water-containing cell structures of the organic constituents and expelling of the engendered exhaust vapor (46, 48) containing organic constituents.

2. Method in accordance with claim 1, wherein during a boiling extraction water (6) or another suitable leaching fluid is supplied to the reactor functioning as a boiling extractor (2), and a proportion of the organic constituents is washed out with the water (6) and a part of the organic constituents and/or bound nitrogen is expelled overhead with the generated exhaust vapor (48) as ammonia.

3. Method in accordance with claim 2, wherein boiling extraction is followed by a boiling drying having the features of Claim 1.

4. Method in accordance with any one of the foregoing claims, wherein a boiling drying in accordance with Claim 1 or a boiling extraction having the features of Claim 2 is preceded by a pre-heating (108) of the waste substance (1).

5. Method in accordance with claim 4, wherein the pre-heating (108) takes place through an aerobic retting process.

6. Method in accordance with any one of the foregoing claims, wherein the exhaust vapor (46, 48) is supplied to a condenser, preferably to a cooler (66).

7. Method in accordance with claim 6, wherein leaked air generated during the process is burnt in a burner (26) or supplied to a processing.

8. Method in accordance with any one of claims 2 to 7, wherein organically contaminated leaching fluid is supplied to a biogas plant (20).

9. Method in accordance with claim 8, wherein fermentation water (32) decontaminated in the biogas plant is recycled to the boiling reactor (2) as circulation or process water (6).

10. Method in accordance with claim 8 or 9, wherein the generated biogas (24) is used for generating process heat or electrical energy.

11. Method in accordance with any one of the foregoing claims, wherein subsequently to a boiling drying having the features of claim 1 a cooling drying of the warm dry matters takes place.

12. Method in accordance with claim 2 and 3, wherein the boiling drying and the boiling extraction are performed in the same reactor (2, 42, 90).

13. Processing plant for processing waste substances (1) containing organic constituents, in particular for carrying out the method in accordance with any one of the foregoing claims, including a heatable reactor (2, 42, 90) capable of being taken under vacuum to a boiling temperature of water (6) or of another leaching fluid, and having a waste substances inlet (84), a material discharge (88), a vacuum port, a heating (92), an exhaust vapor outlet (94) and a means for the introduction of shear forces, in particular a stirring mechanism (106).

14. Processing plant in accordance with claim 13, wherein the reactor is a boiling extractor (2) having a leaching fluid inlet (84).

15. Processing plant in accordance with claim 13, wherein the reactor is a boiling dryer (42) for dehydrating the waste substances.

16. Processing plant in accordance with claim 15, wherein a pre-heater (108) is arranged upstream of the boiling dryer (42).

17. Processing plant in accordance with claim 14 and 15, wherein the boiling dryer (2) and the boiling dryer (42) are formed by the same reactor (2, 42, 90).

18. Processing plant in accordance with any one of claims 14 to 18, including a biogas plant (20) for processing of the contaminated leaching water.

19. Processing plant in accordance with claim 18, including a circulation means for recycling fermentation water (32) occurring in the biogas plant (20) as process water (6).

20. Processing plant in accordance with any one of claims 15 to 19, including a cooling dryer for post-drying of the warm dry matter.

21. Processing plant in accordance with any one of claims 13 to 20, including a condenser (66) for the exhaust vapor (46,48).

22. Processing plant in accordance with any one of claims 13 to 21, wherein the stirring mechanism (106) has a stirrer through which the waste substances may be conveyed from the inlet to the outlet.

23. Processing plant in accordance with claim 22, wherein the stirring mechanism (106) has stirring members (107) through which the material may be stripped off an inner peripheral wall of the reactor (2, 42, 90).

24. Processing plant in accordance with claim 23 or 24, wherein the stirring element (107) has the form of a worm gear with or without a center shaft.

25. Processing plant in accordance with any one of claims 22 to 24, wherein the conveying direction of the stirring mechanism (106) is reversible.

26. Processing plant in accordance with any one of claims 22 to 25, wherein the stirring element (107) is heated.

27. Processing plant in accordance with any one of claims 14 to 26, wherein the waste substances inlet and the leaching fluid inlet have the form of a common inlet (84).

28. Processing plant in accordance with any one of claims 13 to 27, including a steam inlet for supplying heating steam (84).

29. Processing plant in accordance with claim 22, wherein the reactor (2, 42, 90) has at least two sections (90.1, 90.2) in which a respective stirring mechanism (106) is arranged.

30. Processing plant in accordance with claim 29, wherein the two sections (90.1, 90.2) are interconnected via shifting components (104), so that the material may be conveyed in the circulation.

31. Processing plant in accordance with any one of claims 15 to 28, wherein a classification press (14) is arranged downstream of the boiling dryer (42).

32. Processing plant in accordance with any one of claims 13 to 31, including an effluent purification plant (36) for processing effluent occurring during the process.
